# EUROPEAN PATENT APPLICATION

(11) **EP 4 654 705 A1**
(43) Date of publication of application: **26.11.2025**
(21) Application number: 24744137.1
(22) Date of filing: 10.01.2024
(51) Int. Cl.: H04W 72/044

(54) **FDSS PARAMETER CONFIGURATION METHOD AND APPARATUS, USER EQUIPMENT, AND STORAGE MEDIUM**

(30) Priority: 16.01.2023 CN 202310085160
(71) Applicant: Vivo Mobile Communication Co., Ltd., Dongguan, Guangdong 523863 (CN)
(72) Inventor: JIANG, Wei, Dongguan, Guangdong 523863 (CN); LIN, Zhipeng, Dongguan, Guangdong 523863 (CN)
(74) Representative: dompatent
(86) International application number: PCT/CN2024/071561
(87) International publication number: WO 2024/152961

(57) **Abstract**

The present application relates to the technical field of communications, and discloses an FDSS parameter configuration method and apparatus, a user equipment (UE), and a storage medium. The FDSS parameter configuration method of embodiments of the present application comprises: a UE acquires first information; and the UE performs dynamic handover or configuration of an FDSS-related parameter according to the first information, the FDSS-related parameter being a parameter used for executing FDSS-based uplink transmission. The first information comprises at least one of the following: an association relationship between the FDSS-related parameter and a first parameter, the first parameter being a parameter used for executing uplink transmission; first indication information, the first indication information being used for indicating the FDSS-related parameter needing to be subjected to the dynamic handover or configuration; and a signal measurement value or a signal statistical value.

## Description

### CROSS-REFERENCE TO RELATED APPLICATIONS

This application claims priority of Chinese Patent Application No. 202310085160.X, filed in China on January 16, 2023, which is incorporated herein by reference in its entirety.

### TECHNICAL FIELD

This application belongs to the field of communication technologies, and in particular, to an FDSS parameter configuration method and apparatus, a user equipment, and a storage medium.

### BACKGROUND

In the field of communication, frequency domain spectrum shaping (Frequency Domain Spectrum Shaping, FDSS) is a frequency spectrum shaping technology, which can effectively reduce a peak-to-average power ratio (Peak-to-Average Power Ratio, PAPR) of a signal, increase a transmission power of the signal, and then improve demodulation performance of a system. However, introduction of a shaping filter (an FDSS filter) reduces a transmission power at an edge of an assigned band, thereby degrading system performance.

Currently, the system performance may be enhanced through the frequency domain extension (Extension FDSS, also referred to as FDSS with spectrum extension) technology. In other words, when FDSS-based uplink transmission is performed, some extension (extension) physical resource blocks (Physical resource blocks, PRBs) may be reserved for the FDSS, to adjust frequency domain waveform roll-off, and obtain a relatively smooth shaped waveform, thereby obtaining a better low-PAPR effect. Therefore, a relatively good gain effect can be obtained in modulation, thereby achieving the purpose of improving system performance.

However, in different modulation manners or different scheduling configurations, the FDSS can bring different gains. In this way, for uplink transmission in different conditions/scenarios, how to configure the FDSS to ensure system performance in various scenarios is an urgent problem to be resolved.

### SUMMARY

Embodiments of this application provide an FDSS parameter configuration method and apparatus, a user equipment, and a storage medium, which can resolve a problem of how to configure FDSS to ensure system performance in various scenarios for uplink transmission in different conditions/scenarios.

According to a first aspect, an FDSS parameter configuration method is provided. The method includes: A user equipment (User Equipment, UE) obtains first information. The UE dynamically switches or configures an FDSS-related parameter based on the first information, where the FDSS-related parameter is a parameter used for performing FDSS-based uplink transmission. The first information includes at least one of the following: an association relationship between the FDSS-related parameter and a first parameter, where the first parameter is a parameter used for performing uplink transmission; a first indication information, where the first indication information is used for indicating the FDSS-related parameter that needs to be dynamically switched or configured; and a signal measurement value or a signal statistics value.

According to a second aspect, an FDSS parameter configuration apparatus is provided. The FDSS parameter configuration apparatus includes: an obtaining module and an execution module. The obtaining module is configured to obtain first information. the execution module is configured to dynamically switch or configure an FDSS-related parameter based on the first information obtained by the obtaining module, where the FDSS-related parameter is a parameter used for performing FDSS-based uplink transmission. The first information includes at least one of the following: an association relationship between the FDSS-related parameter and a first parameter, where the first parameter is a parameter used for performing uplink transmission; a first indication information, where the first indication information is used for indicating the FDSS-related parameter that needs to be dynamically switched or configured; and a signal measurement value or a signal statistics value.

According to a third aspect, a UE is provided. The UE includes a processor and a memory. The memory stores a program or an instruction executable in the processor. The program or the instruction, when executed by the processor, implements the steps of the method described in the first aspect.

According to a fourth aspect, a UE is provided, including a processor and a communication interface. The processor is configured to obtain first information; and dynamically switch or configure an FDSS-related parameter based on the first information, where the FDSS-related parameter is a parameter used for performing FDSS-based uplink transmission. The first information includes at least one of the following: an association relationship between the FDSS-related parameter and a first parameter, where the first parameter is a parameter used for performing uplink transmission; a first indication information, where the first indication information is used for indicating the FDSS-related parameter that needs to be dynamically switched or configured; and a signal measurement value or a signal statistics value.

According to a fifth aspect, a readable storage medium is provided. The readable storage medium stores a program or an instruction. The program or the instruction, when executed by a processor, implements the steps of the method described in the first aspect.

According to a sixth aspect, a chip is provided. The chip includes a processor and a communication interface. The communication interface is coupled to the processor. The processor is configured to run a program or an instruction to implement the method described in the first aspect.

According to a seventh aspect, a computer program/program product is provided. The computer program/program product is stored in a storage medium. The computer program/program product is executed by at least one processor, to implement the steps of the FDSS parameter configuration method described in the first aspect.

In embodiments of this application, the UE may dynamically switch or configure, based on the first information, an FDSS-related parameter used for performing FDSS-based uplink transmission. The first information includes at least one of the following: an association relationship between the FDSS-related parameter and the first parameter for performing uplink transmission, first indication information used for indicating the FDSS-related parameter that needs to be dynamically switched or configured, and a signal measurement value or a signal statistics value. In this solution, the UE may dynamically switch or configure some configurations of the FDSS (that is, the FDSS-related parameter) based on the association relationship between the FDSS-related parameter and the first parameter of the uplink transmission, and/or may dynamically switch or configure some configurations of the FDSS based on the FDSS-related parameter explicitly indicated by the first indication information that needs to be dynamically switched or configured, and/or may learn, based on the signal measurement value or the signal statistics value, that is, actual measurement or statistics status of some parameters of the signal, the FDSS-related parameter that may be used for performing uplink transmission. This is implemented through dynamic switching or configuration of some configurations of the FDSS. In this way, for uplink transmission in various scenarios, the UE may dynamically switch or configure the FDSS-related parameter, so that when uplink transmission is performed based on the FDSS, a gain brought by the FDSS satisfies uplink transmission in various scenarios, and the PAPR can be effectively reduced, to achieve optimal system performance.

### BRIEF DESCRIPTION OF THE DRAWINGS

FIG. 1 is a schematic architectural diagram of a wireless communication system according to an embodiment of this application;
FIG. 2 is a schematic diagram of a frequency spectrum shaping method based on a reserved idle PRB according to the related art;
FIG. 3 is a schematic diagram of a frequency spectrum shaping method based on a repeated PRB according to the related art;
FIG. 4 is a flowchart I of an FDSS parameter configuration method according to an embodiment of this application;
FIG. 5 is a flowchart II of an FDSS parameter configuration method according to an embodiment of this application;
FIG. 6 is a schematic structural diagram of an FDSS parameter configuration apparatus according to an embodiment of this application;
FIG. 7 is a schematic structural diagram of hardware of a communication device according to an embodiment of this application; and
FIG. 8 is a schematic structural diagram of hardware of a UE according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used to distinguish between similar objects, and are not used to describe a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of connected objects, and a character "/" generally indicates an "or" relationship between associated objects.

It should be noted that, the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" in embodiments of this application are usually interchangeably used, and the described technology may be applied to both the system and the radio technology mentioned above, or may be applied to another system and radio technology. A new radio (New Radio, NR) system is described below as an example, and the term NR is used in most of the following description. Nevertheless, the technologies may also be applied to an application other than an application of the NR system, such as a 6^{th} Generation (6^{th} Generation, 6G) communication system.

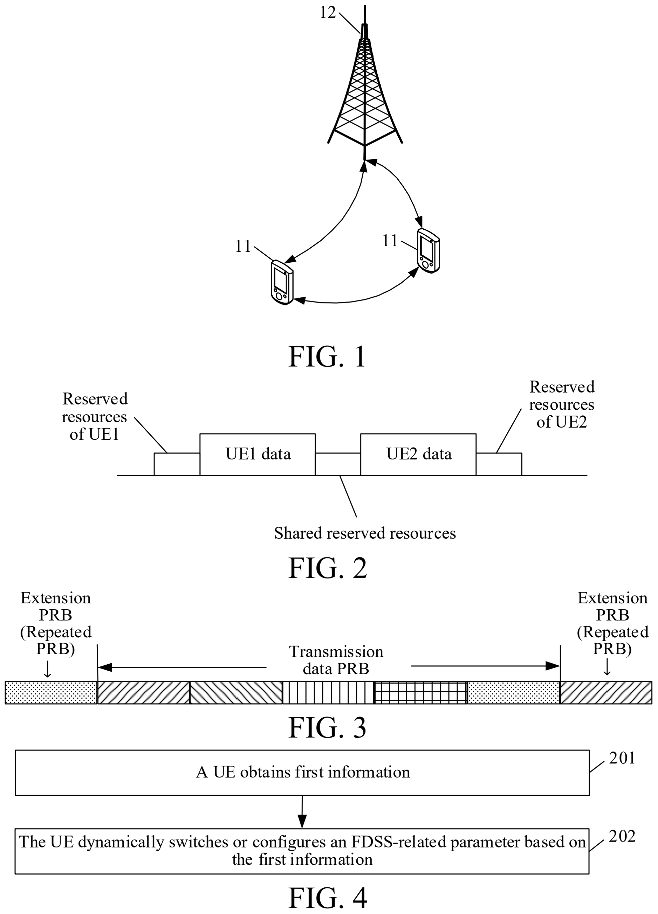

FIG. 1 is a block diagram showing a wireless communication system to which an embodiment of this application may be applied. The wireless communication system includes a terminal 11 and a network side device 12. The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet apparatus (Mobile Internet Device, MID), an augmented reality (augmented reality, AR)/virtual reality (virtual reality, VR) device, a robot, a wearable device (Wearable Device), an on-board device (Vehicle User Equipment, VUE), a pedestrian user equipment (Pedestrian User Equipment, PUE), smart home (a home device with a wireless communication capability, such as a refrigerator, a television, a washing machine, or furniture), a game console, a personal computer (personal computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. It should be noted that a specific type of the terminal 11 is not limited in embodiments of this application. The network side device 12 may include an access network device or a core network device. The access network device 12 may also be referred to as a wireless access network device, a radio access network (Radio Access Network, RAN), a wireless access network function, or a wireless access network unit. The access network device 12 may include a base station, a WLAN access point, a Wi-Fi node, and the like, The base station may be referred to as a NodeB, an evolved NodeB (eNB), an access point, a base transceiver station (Base Transceiver Station, BTS), a radio base station, a radio transceiver, a basic service sets (Basic Service Set, BSS), an extended service set (Extended Service Set, ESS), a household NodeB, a household evolved NodeB, a transmission reception point (Transmission Reception Point, TRP), or some other appropriate term in the field, as long as the same technical effect is achieved. The base station is not limited to a specific technical term. It should be noted that, in embodiments of this application, only a base station in the NR system is used as an example, but a specific type of the base station is not limited.

Some concepts and/or terms involved in an FDSS parameter configuration method and apparatus, a user equipment, and a storage medium provided in embodiments of this application are explained below.

### 1. FDSS technology

A peak-to-average power ratio of an analog continuous signal outputted from a set of discrete time domain data signals after passing through a digital analog converter (Digital Analog Converter, DAC) module has a certain relationship with correlation between the set of discrete time domain data.

It is assumed that a set of discrete time domain data signals y(n) are convolved with a set of time delay discrete data d(n), and yd(n) is obtained: *y*(*n*) ⊗ *d*(*n*) = *yd*(*n*).

It is assumed that the peak-to-average power ratios of output signals of y(n) and yd(n) after passing through the DAC are respectively PAPR1 and PAPR2. If d(n) is a set of designed weight coefficient sequences, a correlation between adjacent data of yd(n) is better than a correlation between adjacent data of y(n). A higher correlation indicates a lower PAPR. Therefore, the PAPR2 is less than the PAPR1. Therefore, after a set of discrete time domain data is convolved with a designed set of discrete data, the PAPR may be effectively reduced.

According to the convolution theorem, a convolution operation of two time domain signals may be equivalent to a dot product operation of the two time domain signals in frequency domain. Therefore, a set of discrete time domain data is transformed into discrete frequency domain data through DFT, then a dot product is performed on a designed frequency spectrum shaping (Spectrum Shaping) sequence, and then inverse discrete Fourier transform (Inverse Discrete Fourier Transform, IDFT) is performed on the time domain signal to effectively reduce the PAPR. Since the dot product operation is less complex than the convolution operation, and this PAPR reduction technology operates better in frequency domain, this technology is referred to as an FDSS technology.

### 2. Extension (extension) FDSS technology

The extension FDSS technology may also be referred to as FDSS with frequency domain extension (FDSS with spectrum extension).

Introduction of a shaping filter reduces a transmission power at an edge of an assigned band, thereby degrading demodulation performance.

Frequency spectrum extension is a possible method for improving the demodulation performance. During FDSS transmission, a few adjacent PRBs thereof may be reserved to adjust frequency domain waveform roll-off, obtain a relatively smooth shaped waveform, optimize a coefficient d(n), and obtain a better low-PAPR effect. An implementation thereof mainly includes two manners: reserving an idle PRB and reserving a repeated PRB.

As shown in FIG. 2, a schematic diagram of a frequency spectrum shaping manner based on a reserved idle PRB is shown. After UE data is scheduled, some idle PRBs are reserved for the UE data, so as to put a roll-off side lobe of a filter into the idle PRBs. Compared with the manner of close proximity between UEs, reserving some idle PRBs may reduce a roll-off amplitude requirement and a cut-off frequency requirement of UE windowing, achieve a smoother descent at a roll-off position, and reduce relatively sharp jitter, thereby better improving PAPR characteristics, reducing a power rollback value, obtaining a higher actual transmission power, and obtaining better performance improvement.

As shown in FIG. 3, a schematic diagram of a frequency spectrum shaping manner based on a repeated PRB is shown. An implementation of repeated PRB-based frequency spectrum shaping is: content of a first PRB in a transmission data PRB is repeated and added to the end of the transmission data PRB, and before content of a last PRB in the transmission data PRB is repeated and added to the transmission PRB, a PRB bandwidth type shown in FIG. 3 is formed. Compared with the foregoing manner in FIG. 2, in this manner, the reserved PRBs may have a better correlation than the reserved idle PRBs, and therefore may have better performance improvement.

The FDSS parameter configuration method provided in embodiments of this application is described in detail below through some embodiments and application scenarios thereof with reference to the accompanying drawings.

As described in the foregoing background, the frequency spectrum extension is a method for improving demodulation performance. A better gain effect may be obtained in modulation by reserving some extension PRBs for the FDSS. However, in different modulation manners or different scheduling configurations, the FDSS can bring different gains. In this way, for uplink transmission in different conditions/scenarios, how to configure the FDSS to ensure system performance in various scenarios is an urgent problem to be resolved.

An embodiment of this application provides an FDSS parameter configuration method. The UE may dynamically switch or configure, based on first information, an FDSS-related parameter for performing FDSS-based uplink transmission. The first information includes at least one of the following: an association relationship between the FDSS-related parameter and the first parameter for performing uplink transmission, first indication information used for indicating the FDSS-related parameter that needs to be dynamically switched or configured, and a signal measurement value or a signal statistics value. In this solution, the UE may determine, based on the association relationship between the FDSS-related parameter and the first parameter of the uplink transmission, the FDSS-related parameter required for the uplink transmission, which is implemented through dynamic switching or configuration of some configurations of the FDSS (that is, the FDSS-related parameter), and/or the FDSS-related parameter that needs to be dynamically switched or configured as explicitly indicated by the first indication information is implemented through dynamic switching or configuration of some configurations of the FDSS, and/or the FDSS-related parameter that may be used for performing uplink transmission is learned based on the signal measurement value or the signal statistics value, that is, actual measurement or statistics status of some parameters of the signal. This is implemented through dynamic switching or configuration of some configurations of the FDSS. In this way, for uplink transmission in various scenarios, the UE may dynamically switch or configure the FDSS-related parameter, so that when uplink transmission is performed based on the FDSS, a gain brought by the FDSS satisfies uplink transmission in various scenarios, and the PAPR can be effectively reduced, to achieve optimal system performance.

An embodiment of this application provides an FDSS parameter configuration method. FIG. 4 shows a flowchart of an FDSS parameter configuration method according to an embodiment of this application. As shown in FIG. 4, the FDSS parameter configuration method provided in this embodiment of this application may include step 201 and step 202 below.

Step 201: A UE obtains first information.

Step 202: The UE dynamically switches or configures an FDSS-related parameter based on the first information.

In this embodiment of this application, the foregoing FDSS-related parameter is a parameter for performing FDSS-based uplink transmission.

In this embodiment of this application, the foregoing first information includes at least one of the following:
an association relationship between the FDSS-related parameter and a first parameter, where the first parameter is a parameter used for performing uplink transmission;
a first indication information, where the first indication information is used for indicating the FDSS-related parameter that needs to be dynamically switched or configured; and
a signal measurement value or a signal statistics value.

Optionally, in this embodiment of this application, the foregoing FDSS-related parameter includes at least one of the following:
a frequency domain extension factor (alpha);
a quantity of frequency domain extension PRBs (a quantity of extension PRBs);
an FDSS indication or index;
an FDSS method or a non-FDSS method (FDSS method or non FDSS method);
a frequency domain extension manner;
a type of an FDSS filter (FDSS filter); and
a generation manner of a demodulation reference signal (Demodulation Reference Signal, DMRS) sequence.

Optionally, in this embodiment of this application, the foregoing frequency domain extension factor is any one of the following:
a ratio of the quantity of frequency domain extension PRBs to a total quantity of assigned PRBs; and
a ratio of the quantity of frequency domain extension PRBs to a quantity of PRBs for physical uplink shared channel (Physical Uplink Shared Channel, PUSCH) transmission.

Optionally, in this embodiment of this application, the foregoing frequency domain extension factor is used for determining a quantity of extension PRBs, and the quantity of extension PRBs determined by the frequency domain extension factor is allowed to be corrected to another value as a quantity of actually extension PRBs.

For example, a quantity of actually extension PRBs is an even quantity of PRBs. Assuming that the frequency domain extension factor alpha = 0.2, and the quantity of assigned PRBs is 26, the quantity of actually extension PRBs is 4, that is, a maximum even number less than 0.2×26 is selected as the quantity of actually extension PRBs.

Optionally, in this embodiment of this application, the foregoing quantity of frequency domain extension PRBs is a quantity of extension PRBs on one side of a data transmission PRB, or a sum of quantities of extension PRBs on two sides of the data transmission PRB.

Optionally, in this embodiment of this application, the foregoing FDSS indication or index includes at least one of the following:
an indication or an index of whether FDSS needs to be supported; and
an indication or an index of whether FDSS with frequency domain extension needs to be supported.

Optionally, in this embodiment of this application, the foregoing frequency domain extension manner includes at least one of the following: reserving an idle PRB, and reserving a repeated PRB.

Optionally, in this embodiment of this application, the foregoing manner of reserving a repeated PRB includes at least one of the following: a symmetric extension (Symmetric extension) manner, a cyclic extension (Cyclic extension) manner, and a cyclic shift plus symmetric extension (Cyclic shift plus symmetric extension) manner.

Optionally, in this embodiment of this application, the type of the foregoing FDSS filter includes at least one of the following:
a three-tap FDSS filter (3-tap FDSS filter);
a two-tap FDSS filter (2-tap FDSS filter);
a truncated root raised cosine FDSS filter (Truncated RRC FDSS filter);
a protocol-transparent filter (Transparent filter); and
a protocol-non-transparent filter (Non-transparent filter).

Optionally, in this embodiment of this application, the foregoing generation manner of the DMRS sequence includes at least one of the following:
a first manner, where the first manner is to generate the DMRS sequence based on a total PRB quantity of the data transmission PRBs and the extension PRBs; and
a second manner, where the second manner is to generate the DMRS sequence of the data transmission PRB based on the quantity of data transmission PRBs (excluding the extension PRB).

Optionally, in this embodiment of this application, in the first manner, the DMRS sequence of the extension PRBs is directly generated on a sending terminal.

Optionally, in this embodiment of this application, in the second manner, the DMRS sequence of the extension PRBs is directly obtained by copying the DMRS sequence of the data transmission PRBs.

Optionally, in this embodiment of this application, the foregoing manner of obtaining by copying the DMRS sequence of the data transmission PRB is any one of the following: a symmetric extension manner, a cyclic extension manner, and a cyclic shift plus symmetric extension manner.

Optionally, in this embodiment of this application, the foregoing first parameter includes at least one of the following:
a quantity of assigned PRBs;
a position of an assigned PRB or a starting PRB position;
a modulation manner;
a code rate;
frequency domain resource assignment (Frequency Domain Resource Assignment, FDRA);
time domain resource assignment (Time Domain Resource Assignment, TDRA);
a new transmission or retransmission instruction;
a redundancy version (Redundancy Version, RV) number; and
a transmission power control (Transmit Power Control, TPC) command.

It should be noted that the transmission (retransmission) number is learned through the redundancy version number.

Optionally, in this embodiment of this application, the foregoing quantity of assigned PRBs is a quantity of PRBs only used for PUSCH transmission, or a total quantity of PRBs of the PRBs used for the PUSCH transmission and the extension PRBs.

Optionally, in this embodiment of this application, different values or intervals of the foregoing first parameter are associated with the dynamically switched/configured FDSS-related parameter, that is, a pre-defined or pre-configured association relationship exists.

For example, the UE may determine a corresponding FDSS-related parameter based on the quantity of assigned PRBs and the foregoing association relationship. For example: different intervals of the quantity of assigned PRBs are associated with different frequency domain extension factors (alpha). When the quantity of assigned PRBs is within an interval [A, B], a corresponding frequency domain extension factor (alpha) is a value X; and when the quantity of assigned PRBs is within an interval [C, D], a corresponding frequency domain extension factor (alpha) is a value Y.

In this embodiment of this application, in different scheduling parameter configurations (for example, different modulation manners or different scheduling PRBs), different FDSS parameter configurations (for example, different frequency domain extension factors or different frequency domain extension manners) can bring different performance gains. In other words, each scheduling parameter configuration has a respective optimal FDSS parameter. Therefore, in this solution, for uplink transmission in different conditions/scenarios, optimal system performance can be implemented by dynamically switching/changing some configurations of the FDSS.

Optionally, the FDSS parameter configuration method provided in embodiments of this application further includes step 301 and step 302 below.

Step 301: In a case that the quantity of assigned PRBs is the quantity of PRBs only used for the PUSCH transmission, a UE determines a frequency domain extension factor or a quantity of frequency domain extension PRBs based on the quantity of assigned PRBs.

Step 302: The UE selects M PRBs on two sides of the assigned PRBs as extension PRBs, and performs FDSS filtering on the assigned PRBs and the M extension PRBs.

M is the quantity of frequency domain extension PRBs.

It may be understood that in a case that the assigned PRB is a PRB only used for the PUSCH transmission, the UE may determine a frequency domain extension factor (alpha) or the quantity of frequency domain extension PRBs based on the quantity of assigned PRBs, the UE additionally selects M PRBs on two sides of the assigned PRB as extension PRBs (that is, M extension PRBs), and the UE performs FDSS filtering on the assigned PRB and the M extension PRBs.

It should be noted that in this embodiment of this application, the foregoing step 201 and step 202 may be first performed, and then the foregoing step 301 and step 302 are performed.

Optionally, the FDSS parameter configuration method provided in embodiments of this application further includes step 401 and step 402 below.

Step 401: A UE determines a frequency domain extension factor or the quantity of frequency domain extension PRBs based on the quantity of assigned PRBs in a case that the quantity of assigned PRBs is a total PRB quantity of PRBs used for PUSCH transmission and the extension PRBs.

Step 402: The UE selects N PRBs from the assigned PRBs as extension PRBs, and performs FDSS filtering on the assigned PRBs.

N is the quantity of frequency domain extension PRBs.

It may be understood that for a case where the assigned PRBs are the total PRBs used for PUSCH transmission and reserved/extension PRBs, the UE determines a frequency domain extension factor (alpha) or the quantity of frequency domain extension PRBs based on the quantity of assigned PRBs, the UE selects N PRBs from the assigned PRBs as extension PRBs, and the UE performs FDSS filtering on the assigned PRBs.

It should be noted that in this embodiment of this application, the foregoing step 201 and step 202 may be first performed, and then the foregoing step 401 and step 402 are performed.

In this embodiment of this application, the UE may determine a corresponding FDSS-related parameter based on the association relationship between different values or intervals of the first parameter and an FDSS-related parameter and a parameter currently used for uplink transmission (for example, the quantity of assigned PRBs), that is, an FDSS-related parameter required for uplink transmission. This is implemented through dynamic switching or configuration of the FDSS-related parameter, so that when uplink transmission is performed based on FDSS, a gain brought by the FDSS satisfies uplink transmission in a current scenario, and the PAPR can be effectively reduced, thereby achieving the optimal system performance.

Optionally, in this embodiment of this application, the foregoing first indication information is obtained by at least one of the following:
configuring, through a specific field in downlink control information (Downlink Control Information, DCI) the FDSS-related parameter that needs to be dynamically switched or configured;
configuring, in a manner of radio resource control (Radio Resource Control, RRC) and dynamic activation of the DCI, the FDSS-related parameter that needs to be dynamically switched or configured; and
indicating, through the DCI, a related method for reducing a PAPR among a plurality of related methods for reducing a PAPR, to configure the FDSS-related parameter that needs to be dynamically switched or configured, where the plurality of related methods for reducing a PAPR are pre-configured by a network (for example, through RRC signaling).

It should be noted that the FDSS (for example, an FDSS-related method with frequency domain extension or an FDSS-related method without frequency domain extension) is a method for reducing a PAPR, and another non-FDSS method for reducing a PAPR, such as tone reservation (Tone reservation, TR). Here is a method of reducing the PAPR by indicating the use of FDSS or non-FDSS through the DCI.

Optionally, in this embodiment of this application, in a case that a specific field in the DCI is a first numerical value, it indicates that the FDSS is not used; and in a case that the specific field in the DCI is a second numerical value, it indicates that the FDSS is used.

For example, in a case that a specific field in the DCI is 0, it indicates that the FDSS is not used; and in a case that the specific field in the DCI is 1, it indicates that the FDSS is used.

Optionally, in this embodiment of this application, the frequency domain extension factor is indicated through a specific field in the DCI, to indicate whether the FDSS is used.

Optionally, in this embodiment of this application, a plurality of sets of FDSS-related parameters are pre-configured through the RRC, and a set of FDSS-related parameters among the plurality of sets of FDSS-related parameters are activated through a specific field in the DCI.

For example, in a case that a specific field in the DCI is 0, it indicates that an FDSS parameter set A is activated; and in a case that the specific field in the DCI is 1, it indicates that an FDSS parameter set B is activated.

Optionally, in this embodiment of this application, the foregoing plurality of related methods for reducing a PAPR include: an FDSS-related method with frequency domain extension, an FDSS-related method without frequency domain extension, and a tone reservation-related method.

In this embodiment of this application, a plurality of methods for reducing a PAR/MPR (that is, an FDSS method or a non-FDSS method) are configured through the RRC, and the DCI indicates that the method for reducing a PAR/MPR is used for scheduling/activating sending of the PUSCH. For example, four methods such as {FDSS without spectrum extension, FDSS with spectrum extension factor 0.1, FDSS with spectrum extension factor 0.2, Tone reservation} are configured through the RRC.

Optionally, in this embodiment of this application, for a dynamic scheduling/dynamic grant (Dynamic Grant, DG) PUSCH, two bits in the DCI are scheduled to indicate that the scheduled PUSCH uses the related method for reducing a PAPR.

Optionally, in this embodiment of this application, for a configured grant (Configured Grant, CG) PUSCH, two bits in the DCI are activated to indicate that the activated PUSCH uses the related method for reducing a PAPR.

Optionally, in this embodiment of this application, the foregoing two bits may be newly introduced bit fields (bit field), or may be information bits in a DCI field.

Optionally, in this embodiment of this application, the foregoing DCI may be specific DCI or DCI used for uplink scheduling.

In this embodiment of this application, the UE may dynamically switch or configure some configurations of the FDSS through an FDSS-related parameter that currently needs to be dynamically switched or configured and dynamically indicated based on explicit signaling (the first indication information), so that when uplink transmission is performed based on an FDSS, a gain that can be brought by the FDSS satisfies uplink transmission in a current scenario, and the PAPR can be effectively reduced, to achieve optimal system performance.

Optionally, in this embodiment of this application, the foregoing signal measurement value or the signal statistics value includes at least one of the following:
downlink channel state information (Channel State Information, CSI) or uplink CSI;
reference signal receiving power (Reference Signal Receiving Power, RSRP) of a downlink signal or an uplink signal;
a received signal strength indicator (Received Signal Strength Indicator, RSSI) of the downlink signal or the uplink signal; and
a quantity of failed receptions/a quantity of retransmissions of a PUSCH transmitted through one or more FDSS-related parameters.

Optionally, in this embodiment of this application, the foregoing CSI may include at least one of the following: a channel quality indicator (Channel Quality Indicator, CQI), a precoding matrix indicator (Precoding Matrix Indicator, PMI), a precoding type indicator (Precoding Type Indicator, PTI), a rank indicator (Rank Indicator, RI), and the like.

Optionally, in this embodiment of this application, the foregoing signal may be a reference signal for calculating path loss.

Optionally, in this embodiment of this application, the foregoing signal measurement value or signal statistics value may further include other parameters representing signal strength/quality, for example, at least one of the following: reference signal receiving quality (Reference Signal Receiving Quality, RSRQ), a carrier to interference plus noise ratio (Carrier to Interference plus Noise Ratio, RS-CINR), and a signal to interference plus noise ratio (Signal to Interference plus Noise Ratio, SINR).

Optionally, in this embodiment of this application, different values or intervals of the signal measurement value have a pre-defined or pre-configured association relationship with the FDSS-related parameter. For example, in a case that the CQI measured by the UE is higher than or lower than a threshold value, the UE may adjust a value of the CQI or an FDSS-related parameter corresponding to an interval.

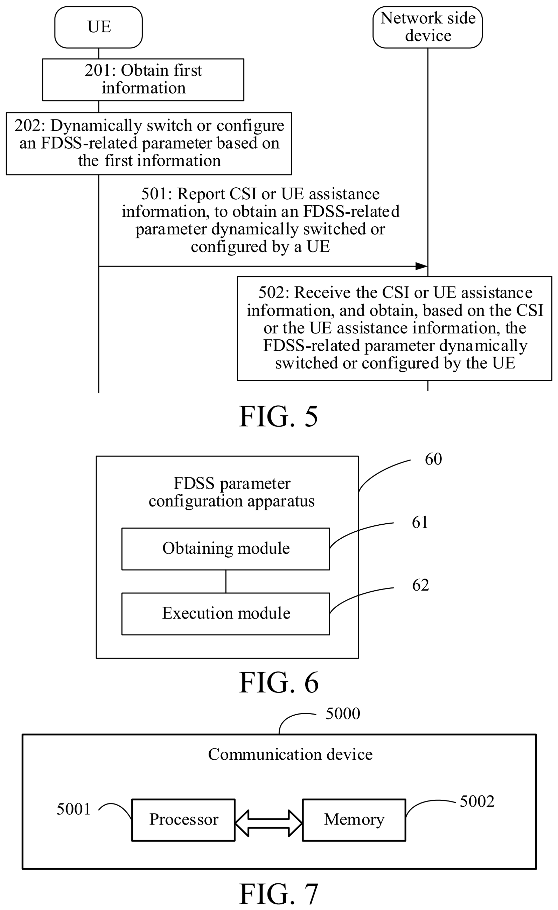

Optionally, with reference to FIG. 4, as shown in FIG. 5, after the foregoing step 202, the FDSS parameter configuration method provided in embodiments of this application further includes step 501 and step 502 below.

Step 501: The UE reports CSI or UE assistance information to a network side device, to obtain an FDSS-related parameter dynamically switched or configured by the UE.

It should be noted that the foregoing UE assistance information may be understood as information used for assisting in obtaining dynamically switched or configured FDSS-related parameter, for example, some FDSS-related information carried in the PUSCH or the PUCCH.

Step 502: A network side device receives the CSI or UE assistance information reported by the UE, and obtains, based on the CSI or the UE assistance information, the FDSS-related parameter dynamically switched or configured by the UE.

It should be noted that an order of execution of step 501 and step 202 is not limited in this embodiment of this application. For example, step 202 may be first performed, and then step 501 is performed. In other words, the UE first dynamically switches or configures the FDSS-related parameter, and then reports the CSI or UE assistance information to the network side device. Alternatively, step 501 may be first performed, and then step 202 is performed. In other words, the UE reports CSI or UE assistance information to a network side device in advance, and then dynamically switches or configures the FDSS-related parameter. Alternatively, step 202 and step 501 may be simultaneously performed. In other words, the UE may report CSI or UE assistance information to the network side device while dynamically switching or configuring the FDSS-related parameter. FIG. 5 is merely an illustration through an example in which step 202 is first performed and then step 501 is performed.

In this embodiment of this application, the UE may learn, based on the signal measurement value or the signal statistics value, that is, a current actual measurement or statistics status of some parameters of a signal, an FDSS-related parameter that may be used for performing uplink transmission, which is implemented through dynamic switching or configuration of some configurations of the FDSS, so that when uplink transmission is performed based on an FDSS, a gain that can be brought by the FDSS satisfies uplink transmission in a current scenario, and the PAPR can be effectively reduced, to achieve optimal system performance.

Optionally, the FDSS parameter configuration method provided in embodiments of this application further includes step 601 below.

Step 601: A UE reports UE capability information to a network side device.

In this embodiment of this application, the UE capability information is used for dynamically configuring or indicating the FDSS-related parameter. The foregoing UE capability information indicates at least one of the following:
supporting FDSS with or without frequency domain extension;
supporting tone reservation (Tone Reservation, TR) with frequency domain extension;
supporting FDSS with frequency domain extension and data copying;
supporting FDSS with frequency domain extension but without data copying;
supporting FDSS with frequency domain extension with quadrature phase shift keying (Quadrature Phase Shift Keying, QPSK) modulation or supporting FDSS with frequency domain extension without QPSK modulation; and
supporting FDSS with frequency domain extension and the extension being in a PRB or sub-PRB level.

It should be noted that the FDSS with frequency domain extension is FDSS with spectrum extension; the FDSS without frequency domain extension is FDSS without spectrum extension; the tone reservation with frequency domain extension is Tone reservation with spectrum extension; the FDSS with frequency domain extension and data copying is FDSS with spectrum extension and data copying; FDSS with frequency domain extension but without data copying is FDSS with spectrum extension but without data copying; FDSS with frequency domain extension with quadrature phase shift keying QPSK modulation or FDSS with frequency domain without QPSK modulation is FDSS with or without spectrum extension with QPSK modulation; FDSS with frequency domain extension and extension being in a sub-PRB level is FDSS with spectrum extension and the extension is in sub-PRB level; and FDSS with frequency domain extension and extension being in a PRB level is FDSS with spectrum extension and the extension is in PRB level.

Optionally, in this embodiment of this application, in a case that the UE only reports support for the FDSS with frequency domain extension, a network dynamically configures or indicates whether the FDSS has the frequency domain extension.

Optionally, in this embodiment of this application, in a case that the network side device dynamically configures or indicates whether the FDSS has frequency domain extension, the network dynamically configures or indicates use of the FDSS only on an Msg3 PUSCH, or use of the FDSS on the PUSCH for uplink transmission, or use of the FDSS on all PUSCHs.

Optionally, in this embodiment of this application, the UE capability information is determined through any one of the following: determined based on a priority of the UE (such as a UE priority indicated by Msg3), indicated by Msg3 information for conflict resolution, and indicated by a physical random access channel (Physical Random Access Channel, PRACH) resource.

Optionally, in this embodiment of this application, the foregoing UE capability information is indicated by Msg3 information for conflict resolution, which may specifically be: indicated based on a new logical channel identifier, or an uplink control message multiplexed on the Msg3, or a newly added bit in the Msg3, or through a DMRS resource of the Msg3 PUSCH, or a scrambling sequence of the Msg3 PUSCH.

It should be noted that in this embodiment of this application, the foregoing step 601 may be first performed, and then step 201 and step 202 are performed.

In this embodiment of this application, the UE may report FDSS-related UE capability information to the network side device, so that the network side device dynamically configures an FDSS-related parameter for the UE based on the FDSS-related UE capability information, the UE dynamically switches or configures the FDSS-related parameter in different scenarios, and when uplink transmission is performed based on FDSS, a gain that can be brought by the FDSS satisfies uplink transmission in a various scenarios, and the PAPR can be effectively reduced, to achieve optimal system performance.

An embodiment of this application provides an FDSS parameter configuration method. A UE may determine, based on an association relationship between an FDSS-related parameter and a first parameter of uplink transmission, the FDSS-related parameter required for the uplink transmission, which is implemented through dynamic switching or configuration of some configurations of the FDSS (that is, the FDSS-related parameter), and/or the FDSS-related parameter that needs to be dynamically switched or configured as explicitly indicated by the first indication information is implemented through dynamic switching or configuration of some configurations of the FDSS, and/or the FDSS-related parameter that may be used for performing uplink transmission is learned based on the signal measurement value or the signal statistics value, that is, actual measurement or statistics status of some parameters of the signal. This is implemented through dynamic switching or configuration of some configurations of the FDSS. In this way, for uplink transmission in various scenarios, the UE may dynamically switch or configure the FDSS-related parameter, so that when uplink transmission is performed based on the FDSS, a gain brought by the FDSS satisfies uplink transmission in various scenarios, and the PAPR can be effectively reduced, to achieve optimal system performance.

The FDSS parameter configuration method provided in embodiments of this application may further be performed by an FDSS parameter configuration apparatus. In embodiments of this application, an FDSS parameter configuration method provided in embodiments of this application is described through an example in which the UE performs the FDSS parameter configuration method.

FIG. 6 is a possible schematic structural diagram of an FDSS parameter configuration apparatus involved in an embodiment of this application. The FDSS parameter configuration apparatus is applied to a UE. As shown in FIG. 6, the FDSS parameter configuration apparatus 60 may include: an obtaining module 61 and an execution module 62.

The obtaining module 61 is configured to obtain first information. The execution module 62 is configured to dynamically switch or configure an FDSS-related parameter based on the first information obtained by the obtaining module 61, where the FDSS-related parameter is a parameter used for performing FDSS-based uplink transmission. The first information includes at least one of the following: an association relationship between the FDSS-related parameter and a first parameter, where the first parameter is a parameter used for performing uplink transmission; a first indication information, where the first indication information is used for indicating the FDSS-related parameter that needs to be dynamically switched or configured; and a signal measurement value or a signal statistics value.

An embodiment of this application provides an FDSS parameter configuration apparatus. The FDSS parameter configuration apparatus may determine, based on an association relationship between an FDSS-related parameter and a first parameter of uplink transmission, the FDSS-related parameter required for the uplink transmission, which is implemented through dynamic switching or configuration of some configurations of the FDSS (that is, the FDSS-related parameter), and/or the FDSS-related parameter that needs to be dynamically switched or configured as explicitly indicated by the first indication information is implemented through dynamic switching or configuration of some configurations of the FDSS, and/or the FDSS-related parameter that may be used for performing uplink transmission is learned based on the signal measurement value or the signal statistics value, that is, actual measurement or statistics status of some parameters of the signal. This is implemented through dynamic switching or configuration of some configurations of the FDSS. In this way, for uplink transmission in various scenarios, the FDSS parameter configuration apparatus may dynamically switch or configure the FDSS-related parameter, so that when uplink transmission is performed based on the FDSS, a gain brought by the FDSS satisfies uplink transmission in various scenarios, and the PAPR can be effectively reduced, to achieve optimal system performance.

In a possible implementation, the foregoing FDSS-related parameter includes at least one of the following:
a frequency domain extension factor;
a quantity of frequency domain extension PRBs;
an FDSS indication or index;
an FDSS method or a non-FDSS method;
a frequency domain extension manner;
a type of an FDSS filter; and
a generation manner of a DMRS sequence.

In a possible implementation, the foregoing frequency domain extension factor is any one of the following:
a ratio of the quantity of frequency domain extension PRBs to a total quantity of assigned PRBs; and
a ratio of the quantity of frequency domain extension PRBs to a quantity of PRBs used for PUSCH transmission.

In a possible implementation, the foregoing frequency domain extension factor is used for determining a quantity of extension PRBs, and the quantity of extension PRBs determined by the frequency domain extension factor is allowed to be corrected to another value as a quantity of actually extension PRBs.

In a possible implementation, the foregoing quantity of frequency domain extension PRBs is a quantity of extension PRBs on one side of a data transmission PRB, or a sum of quantities of extension PRBs on two sides of the data transmission PRB.

In a possible implementation, the foregoing FDSS indication or index includes at least one of the following:
an indication or an index of whether FDSS needs to be supported; and
an indication or an index of whether FDSS with frequency domain extension needs to be supported.

In a possible implementation, the foregoing frequency domain extension manner includes at least one of the following: reserving an idle PRB, and reserving a repeated PRB; and
the manner of reserving a repeated PRB includes at least one of the following: a symmetric extension manner, a cyclic extension manner, and a cyclic shift plus symmetric extension manner.

In a possible implementation, the foregoing type of the FDSS filter includes at least one of the following:
a three-tap FDSS filter;
a two-tap FDSS filter;
a truncated root raised cosine FDSS filter;
a protocol-transparent filter; and
a protocol-non-transparent filter.

In a possible implementation, the foregoing generation manner of the DMRS sequence includes at least one of the following:
a first manner, where the first manner is to generate the DMRS sequence based on a total PRB quantity of the data transmission PRBs and the extension PRBs; and
a second manner, where the second manner is to generate the DMRS sequence of the data transmission PRB based on the quantity of data transmission PRBs.

In a possible implementation, in the first manner, the DMRS sequence of the extension PRBs is directly generated on a sending terminal; and in the second manner, the DMRS sequence of the extension PRBs is directly obtained by copying the DMRS sequence of the data transmission PRBs.

In a possible implementation, the foregoing manner of obtaining by copying the DMRS sequence of the data transmission PRB is any one of the following: a symmetric extension manner, a cyclic extension manner, and a cyclic shift plus symmetric extension manner.

In a possible implementation, the foregoing first parameter includes at least one of the following:
a quantity of assigned PRBs;
a position of an assigned PRB or a starting PRB position;
a modulation manner;
a code rate;
an FDRA;
a TDRA;
a new transmission or retransmission instruction;
an RV number; and
a TPC command.

In a possible implementation, the foregoing quantity of assigned PRBs is a quantity of PRBs only used for PUSCH transmission, or a total quantity of PRBs of the PRBs used for the PUSCH transmission and the extension PRBs.

In a possible implementation, the FDSS parameter configuration apparatus 60 further includes a determining module. The determining module is configured to determine a frequency domain extension factor or a quantity of frequency domain extension PRBs based on the quantity of assigned PRBs in a case that the quantity of assigned PRBs is the quantity of PRBs only used for the PUSCH transmission. The foregoing execution module 62 is further configured to select M PRBs on two sides of the assigned PRBs as extension PRBs, and perform FDSS filtering on the assigned PRBs and the M extension PRBs, where M is the quantity of frequency domain extension PRBs.

In a possible implementation, the FDSS parameter configuration apparatus 60 further includes a determining module. The determining module is configured to determine a frequency domain extension factor or the quantity of frequency domain extension PRBs based on the quantity of assigned PRBs in a case that the quantity of assigned PRBs is a total PRB quantity of PRBs used for PUSCH transmission and the extension PRBs. The foregoing execution module 62 is further configured to select N PRBs from the assigned PRBs as extension PRBs, and perform FDSS filtering on the assigned PRBs, where N is the quantity of frequency domain extension PRBs.

In a possible implementation, the foregoing first indication information is obtained by at least one of the following:
configuring, through a specific field in DCI, the FDSS-related parameter that needs to be dynamically switched or configured;
configuring, in a manner of RRC configuration and dynamic activation of the DCI, the FDSS-related parameter that needs to be dynamically switched or configured; and
indicating, through the DCI, a related method for reducing a PAPR among a plurality of related methods for reducing a PAPR, to configure the FDSS-related parameter that needs to be dynamically switched or configured, where the plurality of related methods for reducing a PAPR are pre-configured by a network.

In a possible implementation, in a case that a specific field in the DCI is a first numerical value, it indicates that the FDSS is not used; and in a case that the specific field in the DCI is a second numerical value, it indicates that the FDSS is used.

In a possible implementation, the frequency domain extension factor is indicated through a specific field in the DCI, to indicate whether the FDSS is used.

In a possible implementation, a plurality of sets of FDSS-related parameters are pre-configured through the RRC, and a set of FDSS-related parameters among the plurality of sets of FDSS-related parameters are activated through a specific field in the DCI.

In a possible implementation, the foregoing plurality of related methods for reducing a PAPR include: an FDSS-related method with frequency domain extension, an FDSS-related method without frequency domain extension, and a TR-related method.

In a possible implementation, for a DG PUSCH, two bits in the DCI are scheduled to indicate that the scheduled PUSCH uses the related method for reducing a PAPR; and for a CG PUSCH, two bits in the DCI are activated to indicate that the activated PUSCH uses the related method for reducing a PAPR.

In a possible implementation, the foregoing DCI may be specific DCI or DCI used for uplink scheduling.

In a possible implementation, the foregoing signal measurement value or the signal statistics value includes at least one of the following:
downlink CSI or uplink CSI;
an RSRP of a downlink signal or an uplink signal;
an RSSI of the downlink signal or the uplink signal; and
a quantity of failed receptions/a quantity of retransmissions of a PUSCH transmitted through one or more FDSS-related parameters.

In a possible implementation, different values or intervals of the signal measurement value have a pre-defined or pre-configured association relationship with the FDSS-related parameter.

In a possible implementation, the FDSS parameter configuration apparatus 60 further includes a sending module. The sending module is configured to report CSI or UE assistance information to a network side device, to obtain an FDSS-related parameter dynamically switched or configured by a UE.

In a possible implementation, the FDSS parameter configuration apparatus 60 further includes a sending module. The sending module is configured to report UE capability information to a network side device, where the UE capability information is used for dynamically configuring or indicating the FDSS-related parameter. The UE capability information indicates at least one of the following:
supporting FDSS with or without frequency domain extension;
supporting tone reservation with frequency domain extension;
supporting FDSS with frequency domain extension and data copying;
supporting FDSS with frequency domain extension but without data copying;
supporting FDSS with frequency domain extension with QPSK modulation or supporting FDSS with frequency domain extension without QPSK modulation; and
supporting FDSS with frequency domain extension and the extension being in a PRB or sub-PRB level.

In a possible implementation, in a case that the UE only reports support for the FDSS with frequency domain extension, a network dynamically configures or indicates whether the FDSS has the frequency domain extension.

In a possible implementation, in a case that the network side device dynamically configures or indicates whether the FDSS has frequency domain extension, the network dynamically configures or indicates use of the FDSS only on an Msg3 PUSCH, or use of the FDSS on the PUSCH for uplink transmission, or use of the FDSS on all PUSCHs.

In a possible implementation, the foregoing UE capability information is determined by any one of the following: determined based on a priority of the UE, indicated through Msg3 information for conflict resolution, and indicated through a PRACH resource.

The FDSS parameter configuration apparatus provided in embodiments of this application can implement the processes implemented by the UE in the foregoing method embodiments, and achieve a same technical effect. To avoid repetition, details are not described herein again.

The FDSS parameter configuration apparatus in embodiments of this application may be a UE, for example, a UE having an operating system, or may be a component in a UE, such as an integrated circuit or a chip. The UE may be a terminal, or may be another device other than the terminal. For example, the UE may include but is not limited to the above listed type of the UE 11, and the another device may be a server, a network attached storage (Network Attached Storage, NAS). This is not specifically limited in embodiments of this application.

Optionally, as shown in FIG. 7, an embodiment of this application further provides a communication device 5000, including a processor 5001 and a memory 5002. The memory 5002 stores a program or an instruction executable in the processor 5001. For example, when the communication device 5000 is a UE, the program or the instruction, when executed by the processor 5001, implements the steps of the above method embodiments of the UE side, and can achieve the same technical effect. To avoid repetition, details are not described herein again.

An embodiment of this application further provides a UE, including a processor and a communication interface. The processor is configured to obtain first information; and dynamically switch or configure an FDSS-related parameter based on the first information, where the FDSS-related parameter is a parameter used for performing FDSS-based uplink transmission. The first information includes at least one of the following: an association relationship between the FDSS-related parameter and a first parameter, where the first parameter is a parameter used for performing uplink transmission; a first indication information, where the first indication information is used for indicating the FDSS-related parameter that needs to be dynamically switched or configured; and a signal measurement value or a signal statistics value. The UE embodiment corresponds to the above method embodiment of the UE side. The implementation processes and implementations of the above method embodiments are applicable to the UE embodiment, and can achieve the same technical effect.

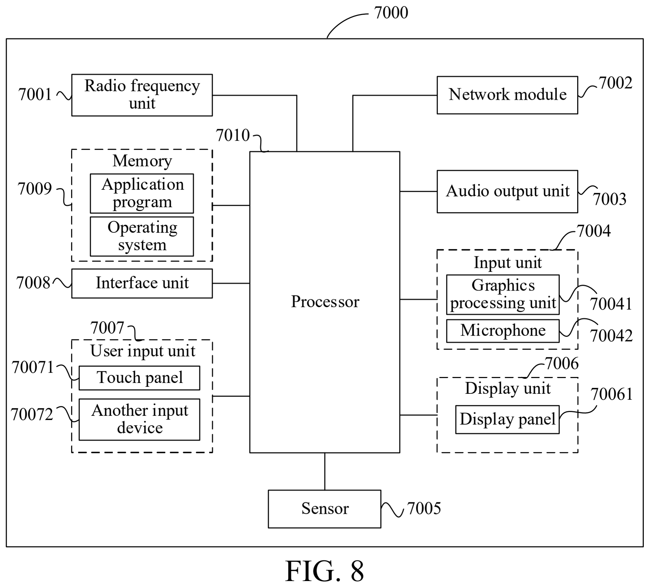

Specifically, FIG. 8 is a schematic diagram of a hardware structure of a UE for implementing an embodiment of this application.

A UE 7000 includes but is not limited to: at least some of components such as a radio frequency unit 7001, a network module 7002, an audio output unit 7003, an input unit 7004, a sensor 7005, a display unit 7006, a user input unit 7007, an interface unit 7008, a memory 7009, and a processor 7010.

A person skilled in the art may understand that the UE 7000 may further include a power supply (for example, a battery) that supplies power to the components. The power supply may be logically connected to the processor 7010 through a power management system, thereby implementing functions such as management of charging, discharging, and power consumption through the power management system. The UE structure shown in FIG. 8 constitutes no limitation on the UE, and the UE may include more or fewer components than those shown in the figure, or some merged components, or different component arrangements. Details are not described herein again.

It should be noted that in embodiments of this application, the input unit 7004 may include a graphics processing unit (Graphics Processing Unit, GPU) 70041 and a microphone 70042. The graphics processing unit 70041 processes image data of a static picture or a video obtained by an image capture apparatus (such as a camera) in a video capture mode or an image capture mode. The display unit 7006 may include a display panel 70061. The display panel 70061 may be configured in a form such as a liquid crystal display or an organic light-emitting diode. The user input unit 7007 includes at least one of a touch panel 70071 and another input device 70072. The touch panel 70071 is also referred to as a touch screen. The touch panel 70071 may include two parts: a touch detection apparatus and a touch controller. The another input device 70072 may include but is not limited to a physical keyboard, a function button (such as a volume control button or a power button), a trackball, a mouse, and a joystick. Details are not described herein again.

In embodiments of this application, the radio frequency unit 7001 receives downlink data from a network side device, and then may transmit the data to the processor 7010 for processing. In addition, the radio frequency unit 7001 may send uplink data to the network side device. Generally, the radio frequency unit 7001 includes but is not limited to an antenna, an amplifier, a transceiver, a coupler, a low noise amplifier, a duplexer, and the like.

The memory 7009 may be configured to store a software program or instructions and various data. The memory 7009 may mainly include a first storage area for storing a program or an instruction and a second storage area for storing data. The first storage area may store an operating system, an application or an instruction required for at least one function (such as a sound playback function and an image playback function), and the like. In addition, the memory 7009 may include a volatile memory or a non-volatile memory, or the memory 7009 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 7009 in embodiments of this application includes but is not limited to these and any other suitable types of memories.

The processor 7010 may include one or more processing units. Optionally, an application processor and a modem processor is integrated into the processor 7010. The application processor mainly processes operations related to an operating system, a user interface, an application, and the like. The modem processor mainly processes a wireless communication signal, such as a baseband processor. It may be understood that the foregoing modem processor may alternatively not be integrated into the processor 7010.

The processor 7010 is configured to obtain first information; and dynamically switch or configure an FDSS-related parameter based on the first information, where the FDSS-related parameter is a parameter used for performing FDSS-based uplink transmission. The first information includes at least one of the following: an association relationship between the FDSS-related parameter and a first parameter, where the first parameter is a parameter used for performing uplink transmission; a first indication information, where the first indication information is used for indicating the FDSS-related parameter that needs to be dynamically switched or configured; and a signal measurement value or a signal statistics value.

An embodiment of this application provides a UE. The UE may determine, based on an association relationship between an FDSS-related parameter and a first parameter of uplink transmission, the FDSS-related parameter required for the uplink transmission, which is implemented through dynamic switching or configuration of some configurations of the FDSS (that is, the FDSS-related parameter), and/or the FDSS-related parameter that needs to be dynamically switched or configured as explicitly indicated by the first indication information is implemented through dynamic switching or configuration of some configurations of the FDSS, and/or the FDSS-related parameter that may be used for performing uplink transmission is learned based on the signal measurement value or the signal statistics value, that is, actual measurement or statistics status of some parameters of the signal. This is implemented through dynamic switching or configuration of some configurations of the FDSS. In this way, for uplink transmission in various scenarios, the UE may dynamically switch or configure the FDSS-related parameter, so that when uplink transmission is performed based on the FDSS, a gain brought by the FDSS satisfies uplink transmission in various scenarios, and the PAPR can be effectively reduced, to achieve optimal system performance.

The UE provided in embodiments of this application can implement the processes implemented by the UE in the foregoing method embodiments, and achieve a same technical effect. To avoid repetition, details are not described herein again.

An embodiment of this application further provides a readable storage medium. The readable storage medium stores a program or an instruction. The program or the instruction, when executed by a processor, implements the processes of the foregoing embodiments of the FDSS parameter configuration method, and can achieve the same technical effect. To avoid repetition, details are not described herein again.

The processor is the processor in the communication device in the foregoing embodiment. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or an instruction, to implement the processes of the foregoing method embodiments, and can achieve the same technical effect. To avoid repetition, details are not described herein again.

It should be understood that the chip mentioned in this embodiment of this application may further be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing method embodiments, and can achieve the same technical effect. To avoid repetition, details are not described herein again.

It should be noted that a term "comprise", "include" or any other variant herein are intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and the apparatus in implementations of this application is not limited to function execution in the order shown or discussed, and may further include function execution in a substantially simultaneous manner or in the opposite order based on the functions involved. For example, the described method may be performed in an order different from the described order, and various steps may further be added, omitted, or combined. Moreover, features described with reference to some examples may be combined in another example.

Through the descriptions of the foregoing implementations, a person skilled in the art may clearly learn that the method in the foregoing embodiments may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including several instructions for causing a terminal (which may be a mobile phone, a computer, a server, an air conditioner, a network device, or the like) to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms without departing from the concept of this application and the protection scope of the claims. These forms fall within the protection of this application.

## Claims

1. A frequency domain spectrum shaping FDSS parameter configuration method, comprising:
obtaining, by a user equipment UE, first information;
dynamically switching or configuring, by the UE, an FDSS-related parameter based on the first information, wherein the FDSS-related parameter is a parameter used for performing FDSS-based uplink transmission; and
the first information comprises at least one of the following:
an association relationship between the FDSS-related parameter and a first parameter, wherein the first parameter is a parameter used for performing uplink transmission;
a first indication information, wherein the first indication information is used for indicating the FDSS-related parameter that needs to be dynamically switched or configured; and
a signal measurement value or a signal statistics value.

2. The method according to claim 1, wherein the FDSS-related parameter comprises at least one of the following:
a frequency domain extension factor;
a quantity of frequency domain extension physical resource blocks PRBs;
an FDSS indication or index;
an FDSS method or a non-FDSS method;
a frequency domain extension manner;
a type of an FDSS filter; and
a generation manner of a demodulation reference signal DMRS sequence.

3. The method according to claim 2, wherein the frequency domain extension factor is any one of the following:
a ratio of the quantity of frequency domain extension PRBs to a total quantity of assigned PRBs; and
a ratio of the quantity of frequency domain extension PRBs to a quantity of PRBs used for physical uplink shared channel PUSCH transmission.

4. The method according to claim 2 or 3, wherein the frequency domain extension factor is used for determining a quantity of extension PRBs, and the quantity of extension PRBs determined by the frequency domain extension factor is allowed to be corrected to another value as a quantity of actually extension PRBs.

5. The method according to claim 2, wherein the quantity of frequency domain extension PRBs is a quantity of extension PRBs on one side of a data transmission PRB, or a sum of quantities of extension PRBs on two sides of the data transmission PRB.

6. The method according to claim 2, wherein the FDSS indication or index comprises at least one of the following:
an indication or an index of whether FDSS needs to be supported; and
an indication or an index of whether FDSS with frequency domain extension needs to be supported.

7. The method according to claim 2, wherein the frequency domain extension manner comprises at least one of the following: reserving an idle PRB, and reserving a repeated PRB; and
the manner of reserving a repeated PRB comprises at least one of the following: a symmetric extension manner, a cyclic extension manner, and a cyclic shift plus symmetric extension manner.

8. The method according to claim 2, wherein the type of the FDSS filter comprises at least one of the following:
a three-tap FDSS filter;
a two-tap FDSS filter;
a truncated root raised cosine FDSS filter;
a protocol-transparent filter; and
a protocol-non-transparent filter.

9. The method according to claim 2, wherein the generation manner of the DMRS sequence comprises at least one of the following:
a first manner, wherein the first manner is to generate the DMRS sequence based on a total PRB quantity of the data transmission PRBs and the extension PRBs; and
a second manner, wherein the second manner is to generate the DMRS sequence of the data transmission PRB based on the quantity of data transmission PRBs.

10. The method according to claim 9, wherein in the first manner, the DMRS sequence of the extension PRBs is directly generated on a sending terminal; and
in the second manner, the DMRS sequence of the extension PRBs is directly obtained by copying the DMRS sequence of the data transmission PRBs.

11. The method according to claim 10, wherein the manner of obtaining by copying the DMRS sequence of the data transmission PRB is any one of the following: a symmetric extension manner, a cyclic extension manner, and a cyclic shift plus symmetric extension manner.

12. The method according to claim 1, wherein the first parameter comprises at least one of the following:
a quantity of assigned PRBs;
a position of an assigned PRB or a starting PRB position;
a modulation manner;
a code rate;
frequency domain resource assignment FDRA;
time domain resource assignment TDRA;
a new transmission or retransmission instruction;
a redundancy version RV number; and
a transmission power control TPC command.

13. The method according to claim 12, wherein the quantity of assigned PRBs is a quantity of PRBs only used for PUSCH transmission, or a total quantity of PRBs of the PRBs used for the PUSCH transmission and the extension PRBs.

14. The method according to claim 13, further comprising:
determining, by the UE, a frequency domain extension factor or a quantity of frequency domain extension PRBs based on the quantity of assigned PRBs in a case that the quantity of assigned PRBs is the quantity of PRBs only used for the PUSCH transmission; and
selecting, by the UE, M PRBs on two sides of the assigned PRBs as extension PRBs, and performing FDSS filtering on the assigned PRBs and the M extension PRBs, wherein M is the quantity of frequency domain extension PRBs.

15. The method according to claim 13, further comprising:
determining, by the UE, a frequency domain extension factor or the quantity of frequency domain extension PRBs based on the quantity of assigned PRBs in a case that the quantity of assigned PRBs is a total PRB quantity of PRBs used for PUSCH transmission and the extension PRBs; and
selecting, by the UE, N PRBs from the assigned PRBs as extension PRBs, and performing FDSS filtering on the assigned PRBs, wherein N is the quantity of frequency domain extension PRBs.

16. The method according to claim 1, wherein the first indication information is obtained by at least one of the following:
configuring, through a specific field in downlink control information DCI, the FDSS-related parameter that needs to be dynamically switched or configured;
configuring, in a manner of radio resource control RRC configuration and dynamic activation of the DCI, the FDSS-related parameter that needs to be dynamically switched or configured; and
indicating, through the DCI, a related method for reducing a peak-to-average power ratio PAPR among a plurality of related methods for reducing a PAPR, to configure the FDSS-related parameter that needs to be dynamically switched or configured, wherein the plurality of related methods for reducing a PAPR are pre-configured by a network.

17. The method according to claim 16, wherein in a case that a specific field in the DCI is a first numerical value, it indicates that the FDSS is not used; and in a case that the specific field in the DCI is a second numerical value, it indicates that the FDSS is used.

18. The method according to claim 17, wherein the frequency domain extension factor is indicated through a specific field in the DCI, to indicate whether the FDSS is used.

19. The method according to claim 16, wherein a plurality of sets of FDSS-related parameters are pre-configured through the RRC, and a set of FDSS-related parameters among the plurality of sets of FDSS-related parameters are activated through a specific field in the DCI.

20. The method according to claim 16, wherein the plurality of related methods for reducing a PAPR comprise: an FDSS-related method with frequency domain extension, an FDSS-related method without frequency domain extension, and a tone reservation TR-related method.

21. The method according to claim 16 or 20, wherein for a dynamic grant DG PUSCH, two bits in the DCI are scheduled to indicate that the scheduled PUSCH uses the related method for reducing a PAPR; and
for a configured grant CG PUSCH, two bits in the DCI are activated to indicate that the activated PUSCH uses the related method for reducing a PAPR.

22. The method according to claim 16, wherein the DCI may be specific DCI or DCI used for uplink scheduling.

23. The method according to claim 1, wherein the signal measurement value or the signal statistics value comprises at least one of the following:
downlink channel state information CSI or uplink CSI;
reference signal receiving power RSRP of a downlink signal or an uplink signal;
received signal strength indicator RSSI of the downlink signal or the uplink signal; and
a quantity of failed receptions/a quantity of retransmissions of a PUSCH transmitted through one or more FDSS-related parameters.

24. The method according to claim 1 or 23, wherein different values or intervals of the signal measurement value have a pre-defined or pre-configured association relationship with the FDSS-related parameter.

25. The method according to claim 1 or 23, further comprising:
reporting, by the UE, CSI or UE assistance information to a network side device, to obtain an FDSS-related parameter dynamically switched or configured by the UE.

26. The method according to claim 1, further comprising:
reporting, by the UE, UE capability information to a network side device, wherein the UE capability information is used for dynamically configuring or indicating the FDSS-related parameter,
wherein the UE capability information indicates at least one of the following:
supporting FDSS with or without frequency domain extension;
supporting tone reservation with frequency domain extension;
supporting FDSS with frequency domain extension and data copying;
supporting FDSS with frequency domain extension but without data copying;
supporting FDSS with frequency domain extension with quadrature phase shift keying QPSK modulation or supporting FDSS with frequency domain extension without QPSK modulation; and
supporting FDSS with frequency domain extension and the extension being in a PRB or sub-PRB level.

27. The method according to claim 26, wherein in a case that the UE only reports support for the FDSS with frequency domain extension, a network dynamically configures or indicates whether the FDSS has the frequency domain extension.

28. The method according to claim 27, wherein in a case that the network side device dynamically configures or indicates whether the FDSS has frequency domain extension, the network dynamically configures or indicates use of the FDSS only on an Msg3 PUSCH, or use of the FDSS on the PUSCH for uplink transmission, or use of the FDSS on all PUSCHs.

29. The method according to claim 26, wherein the UE capability information is determined through any one of the following: determined based on a priority of the UE, indicated through Msg3 information for conflict resolution, and indicated through a physical random access channel PRACH resource.

30. A frequency domain spectrum shaping FDSS parameter configuration apparatus, comprising: an obtaining module and an execution module, wherein
the obtaining module is configured to obtain first information;
the execution module is configured to dynamically switch or configure an FDSS-related parameter based on the first information obtained by the obtaining module, wherein the FDSS-related parameter is a parameter used for performing FDSS-based uplink transmission; and
the first information comprises at least one of the following:
an association relationship between the FDSS-related parameter and a first parameter, wherein the first parameter is a parameter used for performing uplink transmission;
a first indication information, wherein the first indication information is used for indicating the FDSS-related parameter that needs to be dynamically switched or configured; and
a signal measurement value or a signal statistics value.

31. A user equipment UE, comprising a processor and a memory, wherein the memory stores a program or an instruction executable in the processor, and the program or the instruction, when executed by the processor, implements the steps of the frequency domain spectrum shaping FDSS parameter configuration method according to any one of claims 1 to 29.

32. A readable storage medium, storing a program or an instruction, wherein the program or the instruction, when executed by a processor, implements the steps of the frequency domain spectrum shaping FDSS parameter configuration method according to any one of claims 1 to 29.
